# FASCICULE DE BREVET EUROPEEN

(11) **EP 2 918 336 B1**
(45) Date de publication et mention de la délivrance du brevet: **30.08.2017**
(21) Numéro de dépôt: 15305323.6
(22) Date de dépôt: 03.03.2015
(51) Int. Cl.: B01J 19/32

(54) **CONTACTEUR POUR COLONNE D'ECHANGE CONSTITUE D'UN AGENCEMENT DE GARNISSAGES STRUCTURES**
ELEMENT FÜR AUSTAUSCHSÄULE, DIE AUS EINER ANORDNUNG VON STRUKTURIERTEN FÜLLUNGEN BESTEHT
CONTACTOR FOR EXCHANGE COLUMN CONSISTING OF AN ARRANGEMENT OF STRUCTURED LININGS

(30) Priorité: 10.03.2014 FR 1451926
(43) Date de publication de la demande: 16.09.2015
(73) Titulaire: IFP Énergies nouvelles, 92852 Rueil-Malmaison Cedex (FR)
(72) Inventeur: Haroun, Yacine, 69520 GRIGNY (FR); Alix, Pascal, 38150 ROUSSILLON (FR); Fourati, Manel, 69007 LYON (FR)

(56) Documents cités:
- US-A- 5 984 282
- US-A1- 2002 195 727
- US-A1- 2006 244 159
- US-A1- 2007 036 957

## Description

La présente invention concerne le domaine des colonnes de contact gaz/liquide offshore, et plus particulièrement les unités offshore de traitement de gaz, de captage du CO2, de déshydratation ou encore de distillation.

Les unités offshores de traitement de gaz et/ou de captage du CO₂ par lavage aux amines comprennent des colonnes d'absorption et de régénération de fluides, liquides ou gazeux. Ces dernières fonctionnent en écoulement gaz/liquide à contre-courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, sont installées également des colonnes de distillation ou des colonnes de déshydratation.

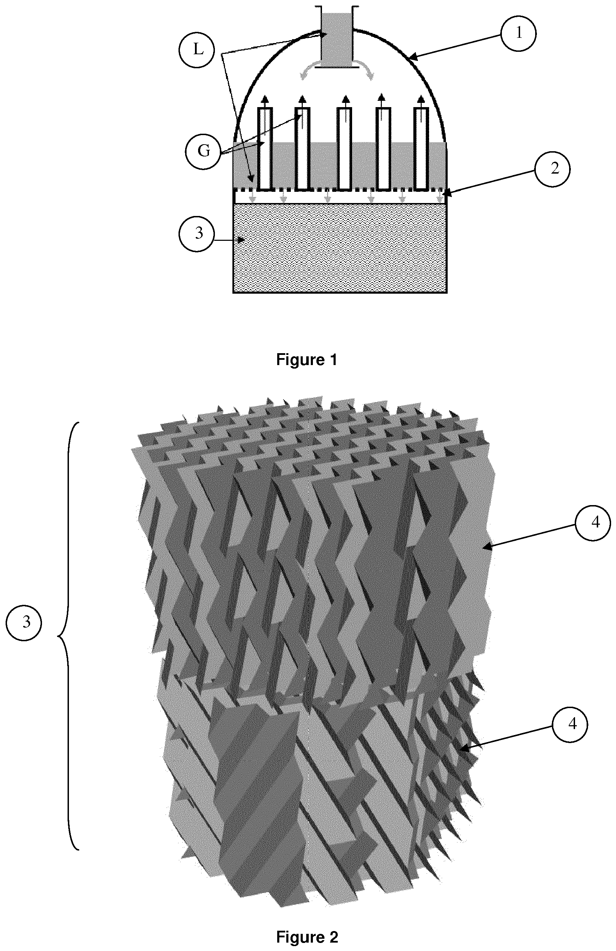

Les colonnes utilisées dans ces unités offshores de traitement de gaz et/ou de capture de CO2 et/ou de distillation et/ou de déshydratation fonctionnent généralement sur le principe d'un échange de matière et/ou de chaleur entre le gaz et le fluide qui circulent dans les colonnes. Les colonnes de mise en contact sont généralement constituées d'une enceinte cylindrique munie d'éléments de mise en contact internes favorisant l'échange entre les fluides. Les éléments de mise en contact (contacteur) qui augmentent la surface de contact peuvent être des garnissages structurés, des garnissages vrac ou des plateaux. La figure 1 représente un cas particulier d'une colonne de traitement de gaz 1 équipée d'un plateau distributeur en tête de colonne. Pour cet exemple, le gaz (G) et le liquide (L) circulent à contre-courant. Classiquement, cette colonne de traitement de gaz 1 comporte plusieurs sections 3 remplies par un contacteur, un plateau distributeur 2 est disposé au-dessus de chaque contacteur 3. Le contacteur gaz/liquide met en contact le gaz G et le liquide L afin de permettre les échanges.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide subissent des mouvements de houle avec jusqu'à six degrés de liberté ("lacet, tangage, roulis, pilonnement, balancement, poussée").

A titre indicatif, l'angle associé à la combinaison des oscillations de tangage et de roulis est de l'ordre de +/- 5° avec une période allant de 10 à 20 s. Les ordres de grandeur des accélérations longitudinale, transversale et verticale rencontrées dans la colonne varient respectivement entre 0,2/0,8/0,2 m/s² à 6 m au-dessus du pont sur lequel est disposée la colonne et 0,3/1,3/0,3 m/s² à 50 m au-dessus du pont. Dans ces conditions, le fonctionnement des colonnes de contact classiques peut être fortement perturbé. En effet, les effets de houle peuvent dégrader l'homogénéité de la distribution des phases dans la section de la colonne.

Cette mal-distribution dans le lit de garnissage, si elle n'est pas maitrisée, peut dégrader de manière importante les performances de la colonne de contact. Afin d'éviter ce type de problèmes, différents empilements adaptés de garnissages structurés ont été développés.

Par exemple, la demande de brevet US5486318 présente des modes de réalisations de contacteurs avec un fractionnement de la section du garnissage. Dans un premier mode de réalisation, la section du garnissage est fractionnée par des parois perforées. La colonne est ainsi composée de plusieurs compartiments équipés de garnissages structurés. Dans un second mode de réalisation, chaque section de garnissage est adjacente perpendiculairement à l'autre section, ainsi la section totale de la colonne est composée d'une multitude de sections de garnissage structuré. Toutefois, pour les modes de réalisation décrits dans ce brevet, le mode de fractionnement adopté peut dégrader l'homogénéité de l'écoulement dans la colonne. En effet, lorsqu' une fraction du liquide sous l'effet du mouvement marin se déplace radialement d'une section vers une autre, le liquide va s'accumuler sur le plan d'obstruction, qui est, selon le mode de réalisation, une paroi perforée ou une plaque de garnissage. L'accumulation du liquide venant de plusieurs feuilles de garnissage va former un chemin préférentiel pour le liquide et le gaz dégradant les performances de transfert de la colonne de contact.

De plus, La demande de brevet US5984282 présente un mode de réalisation d'un agencement d'un contacteur dans lequel le garnissage structuré est arrangé d'une manière spécifique afin de permettre une distribution uniforme. Cependant, cette mise en oeuvre est complexe.

Par ailleurs, les demandes de brevet US7559539 et US7559540 présentent des modes de réalisation de contacteurs selon lesquels, le lit de garnissage est composé de deux types de garnissages structurés (aires géométriques, angles,...). La superposition des lits de garnissages d'aires différentes peut se faire dans la direction axiale de la colonne comme dans la direction radiale selon le brevet. Dans les brevets US7559539 et US7559540, la section de la colonne n'est pas découpée en plusieurs sections de garnissage, de ce fait, sous l'effet du mouvement tridimensionnel de la houle, les modes de réalisation ne permettent pas d'éviter le déplacement du liquide latéralement dans toutes les directions. Par conséquent, ces modes de réalisation ne permettent pas d'assurer une bonne distribution des phases liquide et vapeur en milieu offshore.

Pour pallier ces inconvénients, l'invention concerne un contacteur pour colonne d'échange de chaleur et/ou de matière comprenant un agencement de deux garnissages structurés développant des surfaces géométriques différentes et de direction principale parallèle l'une par rapport à l'autre. Ainsi, la présente invention permet d'assurer une bonne homogénéité et uniformité de la distribution dans le lit de garnissage structurés et ainsi assurer le bon fonctionnement de la colonne, notamment en cas d'inclinaison de la colonne, quelle que soit la direction de l'inclinaison de la colonne.

### Le dispositif selon l'invention

L'invention concerne un contacteur pour colonne d'échange de chaleur et/ou de matière entre deux fluides, ledit contacteur comprenant au moins une couche de garnissage constituée par un agencement d'au moins un premier garnissage structuré et un deuxième garnissage structuré développant une surface géométrique spécifique plus élevée que ledit premier garnissage structuré. La direction principale dudit premier garnissage structuré est parallèle à la direction principale dudit deuxième garnissage structuré.

Selon l'invention, lesdits premier et deuxième garnissages structurés sont agencés en forme de blocs de garnissage structuré, chaque bloc dudit premier garnissage structuré est entouré par des blocs dudit deuxième garnissage structuré.

Avantageusement, lesdits blocs sont sensiblement parallélépipédiques, cylindriques, prismatiques et/ou ont une forme de portions de cylindre.

De préférence, le volume de chaque bloc dudit deuxième garnissage structuré est inférieur au volume de chaque bloc dudit premier garnissage structuré.

Selon un mode de réalisation de l'invention, lesdits blocs étant sensiblement parallélépipédiques, lesdits blocs dudit deuxième garnissage structuré forment, dans un plan horizontal, sensiblement des bandes perpendiculaires.

Alternativement, lesdits blocs étant sensiblement cylindriques, lesdits blocs dudit deuxième garnissage structuré forment, dans un plan horizontal, sensiblement des cercles concentriques.

De manière avantageuse, la périphérie dudit contacteur est constituée par ledit deuxième garnissage structuré.

Selon un aspect de l'invention, la surface géométrique spécifique dudit premier garnissage structuré est comprise entre 100 et 375 m²/m³, et vaut de préférence sensiblement 250 m²/m³.

De plus, la surface géométrique spécifique dudit deuxième garnissage structuré peut être comprise entre 250 et 750 m²/m³, et vaut de préférence sensiblement 500 m²/m³.

De préférence, ledit contacteur comporte plusieurs couches de garnissage, pour lesquelles les directions principales sont sensiblement perpendiculaires entre elles.

En outre, l'invention concerne une colonne d'échange de chaleur et/ou de matière entre un gaz et un liquide, dans laquelle les deux fluides sont mis en contact au moyen d'au moins un contacteur selon l'invention.

L'invention concerne également une structure flottante, notamment pour la récupération d'hydrocarbures. Elle comprend au moins une colonne d'échange de chaleur et/ou de matière entre un gaz et un liquide selon l'invention.

De plus, l'invention concerne l'utilisation d'une colonne selon l'invention pour un procédé de traitement de gaz, de captage de CO₂, de distillation ou de transformation d'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une colonne de traitement de gaz ou de captage de CO₂ équipée d'un plateau distributeur en tête de colonne.
La figure 2 illustre un contacteur constitué de deux couches de garnissage structuré.
Les figures 3 à 8 illustrent différents modes de réalisation de l'agencement des garnissages structurés d'un contacteur selon l'invention.
La figure 9 représente deux plaques consécutives d'un garnissage structuré.

### Description détaillée de l'invention

L'invention concerne un contacteur pour colonne d'échange de chaleur et/ou de matière entre deux fluides. Un contacteur est un élément permettant de mettre en contact deux fluides de manière à favoriser les échanges de chaleur et/ou de matière entre les deux fluides. Le contacteur selon l'invention comprend au moins une couche de garnissage constituée par au moins un premier garnissage structuré et par un deuxième garnissage structuré développant une surface géométrique spécifique plus élevée que le premier garnissage structuré. Selon l'invention, dans chaque couche de garnissage, la direction principale du premier garnissage structuré est parallèle à la direction principale du deuxième garnissage structuré.

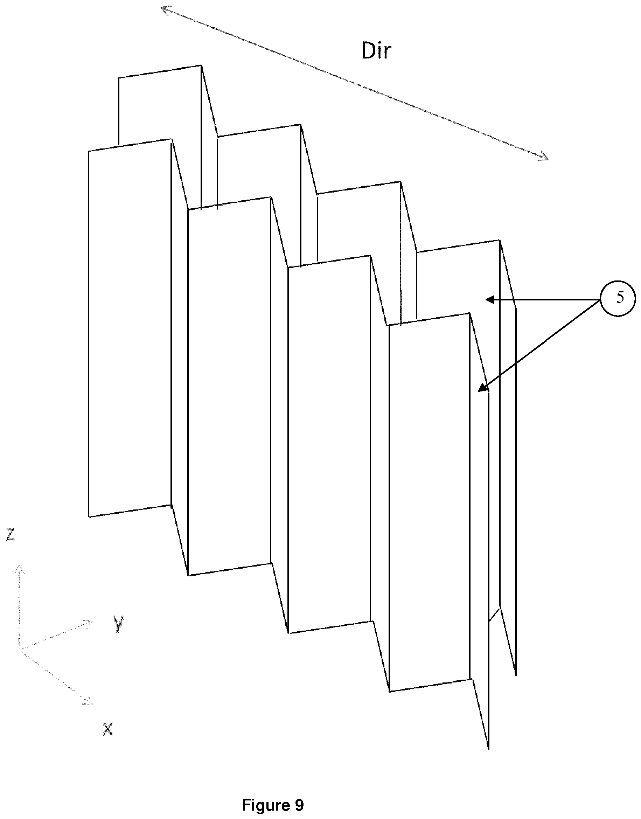

On appelle garnissage structuré, un empilement de plaques ou de feuilles pliées, ondulées, (« corrugated » en anglais, c'est-à-dire sensiblement ondulé avec des angles droits), et arrangées de manière organisée sous forme de grand blocs comme décrit notamment dans les demandes de brevet FR 2913353 (US 2010/0213625), US 3,679,537, US 4,296,050. Les garnissages structurés ont l'avantage d'offrir une grande aire géométrique pour un diamètre représentatif donné. Les plaques constituant le garnissage structuré comportent, dans le plan transversal, une direction principale. La direction principale est donc une direction perpendiculaire à l'axe vertical, définie par la structure des plaques. La figure 9 représente un exemple de deux plaques ondulées 5 consécutives d'un garnissage structuré. Sur cette figure, l'axe z correspond à l'axe vertical dans lequel a lieu l'écoulement des fluides et les axes x et y définissent un plan horizontal (transversal). La direction principale Dir du garnissage structuré est indiquée sur cette figure, elle correspond à la direction orthogonale à l'axe vertical passant par les sommets (ou creux) des ondulations des plaques du garnissage structuré. Sur cette figure, la direction principale du garnissage structuré est parallèle à l'axe x.

Classiquement, le contacteur comprend plusieurs couches de garnissage structuré empilées les unes au-dessus des autres. La figure 2 illustre un contacteur 3 constitué de deux couches 4 de garnissage structuré. Afin d'assurer les échanges entre les fluides, les couches du contacteur ont des directions principales différentes, de préférence elles sont sensiblement perpendiculaires les unes par rapport aux autres. La hauteur des couches peuvent être comprises entre 0,1 et 0,3 m et peut valoir préférentiellement 0,21 m.

La surface géométrique spécifique d'un garnissage structuré correspond à l'aire totale développée par le garnissage, cette surface est exprimée en tant que surface géométrique du garnissage par unité de volume. Classiquement, les garnissages structurés peuvent développer des surfaces géométriques spécifiques allant de 100 à 750 m²/m³. Du fait de leur organisation géométrique, les garnissages structurés développent des surfaces spécifiques supérieures à celles des garnissages vrac, pour une même capacité hydraulique.

Selon l'invention, les sections de garnissages structurés de différentes surfaces géométriques ont leurs directions principales parallèles l'une par rapport à l'autre. Les garnissages structurés peuvent avoir des structures identiques avec des dimensions différentes ou peuvent avoir des structures différentes. Le fractionnement de la section du garnissage en plusieurs lits avec des surfaces géométriques spécifiques différentes permet d'éviter le déplacement massif du liquide latéralement ou la formation de passage préférentiel dans le garnissage, sous l'effet du mouvement de la houle. En effet, la section de garnissage avec une aire géométrique plus élevée va atténuer/freiner l'inertie et le déplacement latéral des phases liquide et vapeur et assurer ainsi une bonne homogénéité de distribution des phases dans le garnissage structuré. De plus, la frontière entre les différentes sections du garnissage n'est pas obstruée. Ainsi, la présente invention permet d'assurer une distribution homogène et uniforme des phases liquide et gazeuse grâce à l'agencement de deux sections de garnissage avec un gradient de surface géométrique spécifique.

Avantageusement, les premier et deuxième garnissages structurés sont agencés de manière à former des blocs de garnissage structuré. Chaque bloc de garnissage structuré est constitué par un type de garnissage structuré (soit par le premier garnissage structuré soir par le deuxième garnissage structuré). De manière non limitative, les blocs sont parallélépipédiques, cylindriques, prismatiques ou ont une forme de portion de cylindre. De manière avantageuse, chaque bloc constitué par le premier garnissage structuré est entouré par des blocs constitués par le deuxième garnissage structuré. Lorsque un bloc constitué par le premier garnissage structuré est situé en périphérie du contacteur, il est entouré par des blocs constitués par le deuxième garnissage structuré et par la colonne (la virole de la colonne). L'agencement du contacteur sous forme de blocs permet d'atténuer/freiner l'inertie et le déplacement des fluides dans toutes les directions. Afin d'optimiser l'homogénéisation de la distribution, les blocs constitués par deuxième garnissage structuré ont un volume inférieur aux volumes des blocs constitués par le premier garnissage structuré. Le volume des blocs constitués par le deuxième garnissage structuré est généralement inférieur au volume des blocs constitués par le premier garnissage structuré, et de préférence inférieur à la moitié de ce volume.

Selon un mode de réalisation de l'invention, la surface géométrique spécifique dudit premier garnissage structuré est comprise entre 100 et 375 m²/m³, et vaut de préférence sensiblement 250 m²/m³. En outre, la surface géométrique spécifique dudit deuxième garnissage structuré est comprise entre 375 et 750 m²/m³, et vaut de préférence sensiblement 500 m²/m³.

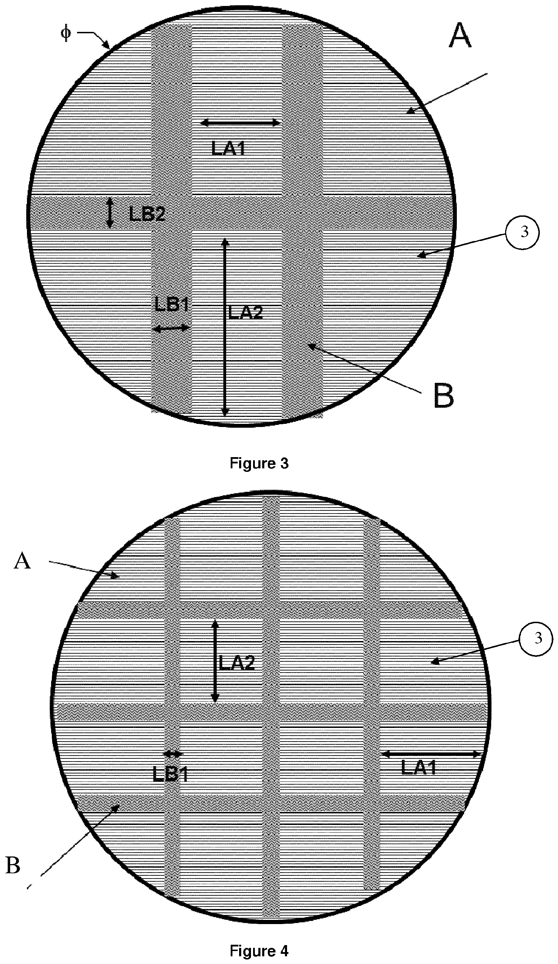

L'invention est composée d'un agencement d'au moins deux types de garnissages structurés avec des aires géométriques différentes. Le principe de base de l'invention est de découper le lit de garnissage selon la direction axiale de la colonne en plusieurs sections par des garnissages avec une surface géométrique spécifique plus élevée. Les figures 3 à 8 présentent différents modes de réalisation de l'invention. Ces figures correspondent à des vues dans le plan horizontal de l'agencement des garnissages structurés. Sur ces figures, le premier garnissage structuré est noté A, et le deuxième garnissage structuré développant une surface géométrique plus élevée est noté B.

Pour les modes de réalisation des figures 3 et 4, les blocs sont sensiblement parallélépipédiques. De plus, les blocs constitués par le deuxième garnissage B ont sensiblement des formes de bande (bloc ayant une largeur très inférieure à la longueur). Telles qu'illustrées, les bandes sont disposées selon deux directions dans le plan horizontal. Ces deux directions sont sensiblement perpendiculaires l'une par rapport à l'autre. Pour ces modes de réalisation, chaque bloc du garnissage A est entouré par les bandes du garnissage B et le cas échéant par le contour de la colonne φ. L'exemple de la figure 4 comporte plus de blocs que l'exemple de la figure 3, par conséquent ce mode de réalisation est plus adapté pour les colonnes de diamètre important, ou pour les colonnes soumises à des inclinaisons plus importantes. Selon un aspect de ces modes de réalisation, le diamètre de la colonne φ est compris entre 0,5 et 10m, les dimensions des blocs du garnissage A : LA1 et LA2 sont comprises entre 0,2 et 5 m et les dimensions des bandes du garnissage B : LB1 et LB2 sont comprises entre 0,1 et 2,5 m. Par exemple, pour le mode de réalisation de la figure 4, les dimensions peuvent être choisies de la manière suivante : le diamètre de la colonne φ vaut 4 m, les dimensions des blocs du garnissage A : LA1 et LA2 valent 0,75 m et les dimensions des bandes du garnissage B : LB1 et LB2 valent 0,2 m, avec une surface géométrique spécifique du garnissage A de 250 m²/m³ et une surface géométrique spécifique du garnissage B de 500 m²/m³.

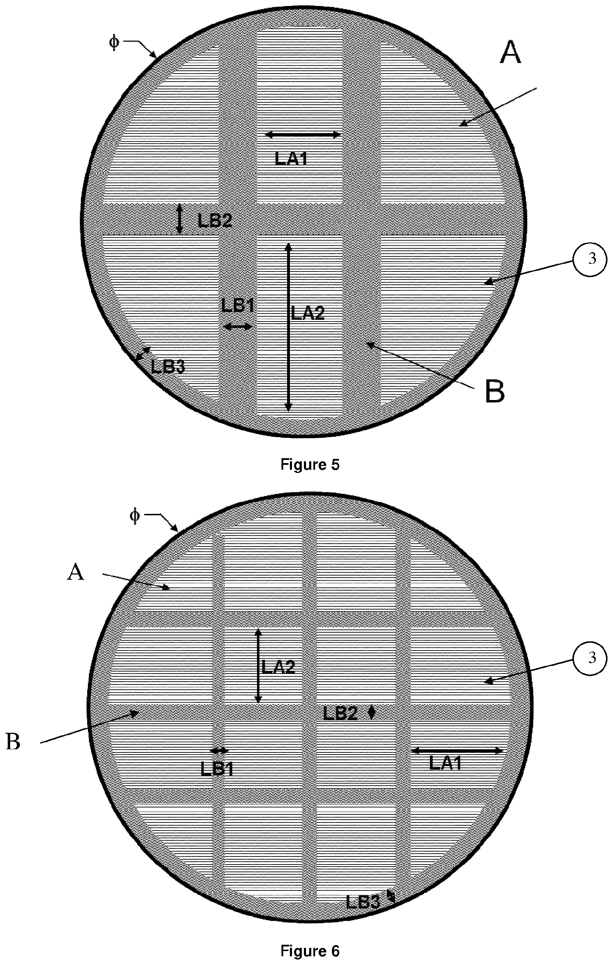

Les modes de réalisation des figures 5 et 6 correspondent aux modes de réalisation des figures 3 et 4 pour lesquels la périphérie du contacteur est constituée par le garnissage structuré B. L'agencement d'un bloc du deuxième garnissage structuré en périphérie permet notamment d'éviter l'accumulation du liquide sur la paroi de la colonne. Les blocs constitués par le deuxième garnissage B ont sensiblement des formes de bande. Telles qu'illustrées, les bandes sont disposées selon deux directions dans le plan horizontal. Ces deux directions sont sensiblement perpendiculaires l'une par rapport à l'autre. Pour ces modes de réalisation, chaque bloc du garnissage A est entouré uniquement par des blocs du garnissage B. L'exemple de la figure 6 comporte plus de blocs que l'exemple de la figure 5, par conséquent ce mode de réalisation est plus adapté pour les colonnes de diamètre important, ou pour les colonnes soumises à des inclinaisons plus importantes. Par exemple, le diamètre de la colonne φ est compris entre 0,5 et 10m, les dimensions des blocs du garnissage A : LA1 et LA2 sont comprises entre 0,2 et 5 m, les dimensions des bandes du garnissage B : LB1 et LB2 sont comprises entre 0,1 et 2,5 m, et la dimension du bloc périphérique LB3 est comprise entre 0,1 et 2,5 m.

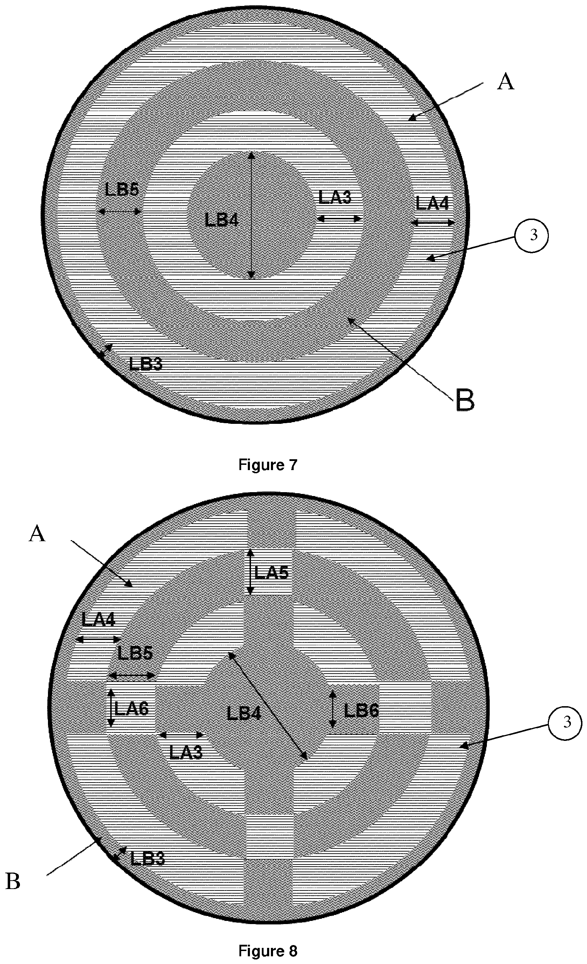

Pour le mode de réalisation de la figure 7, les blocs sont sensiblement cylindriques (tubulaires) dans le plan horizontal : l'agencement des garnissages structurés forme un ensemble de cercles concentriques alternant les garnissages A et B. Pour ce mode de réalisation, le bloc central du contacteur est un bloc du garnissage B et le contacteur comporte un bloc périphérique constitué par le garnissage B. Chaque bloc du garnissage A est donc entouré par des blocs du garnissage B. Par exemple, le diamètre de la colonne φ est compris entre 0,5 et 10m, les dimensions des blocs du garnissage A : LA3 et LA4 sont comprises entre 0,2 et 2,5 m, les dimensions des blocs du garnissage B : LB4 est comprise entre 0,2 et 1 m, et LB5 et LB6 sont comprises entre 0,1 et 2,5 m et la dimension du bloc périphérique LB3 est comprise entre 0,1 et 2,5 m.

Pour le mode de réalisation de la figure 8, la majorité des blocs sont sensiblement cylindriques (tubulaires) ou une forme de portion de cylindre (ou de tube), et une minorité des blocs sont sensiblement rectangulaire dans le plan horizontal. L'agencement des garnissages structurés forme un ensemble de portions de cercles (par exemple sensiblement des quarts de cercle) concentriques alternant les garnissages A et B. De plus, l'agencement comprend quelques rectangles. Cet agencement forme une alternance des garnissages A et B. Pour ce mode de réalisation, le bloc central est un bloc du garnissage B et le contacteur comporte un bloc périphérique constitué par le garnissage B. Chaque bloc du garnissage A est donc entouré par des blocs du garnissage B. L'exemple de la figure 8 comporte plus de blocs que l'exemple de la figure 7, par conséquent ce mode de réalisation est plus adapté pour les colonnes de diamètre important, ou pour les colonnes soumises à des inclinaisons plus importantes. Par exemple, le diamètre de la colonne φ est compris entre 0,5 et 10m, les dimensions des blocs du garnissage A : LA3, LA4, LA6 sont comprises entre 0,2 et 2,5 m, les dimensions des blocs du garnissage B : LB4 est comprise entre 0,2 et 1 m, et LB5 et LB6 sont comprises entre 0,1 et 2,5 m et la dimension du bloc périphérique LB3 est comprise entre 0,1 et 2,5 m.

Ces modes de réalisation permettent de proposer un agencement simple, permettant notamment de simplifier la mise en place, en pratique, des éléments de garnissage dans la colonne de contact.

De plus, d'autres modes de réalisations peuvent être envisagés, par exemple en définissant des blocs sensiblement triangulaires au moyen de bandes du garnissage B orientées à 45° les unes par rapport aux autres, ou en reprenant l'agencement des figures 7 et 8 en retirant la couche périphérique du deuxième garnissage.

Selon une autre variante de réalisation de l'invention, les couches du contacteur sont constitués de plus de deux garnissages structurés différents dont les directions principales sont parallèles les unes par rapport aux autres. Par exemple, le garnissage structuré avec la plus grande surface géométrique spécifique est agencée de telle sorte à freiner/limiter le déplacement du fluide dans la direction principale d'inclinaison de la colonne, et le garnissage avec une surface géométrique spécifique intermédiaire agencée dans une direction perpendiculaire au garnissage structuré avec la plus grande surface géométrique spécifique.

L'invention concerne également une colonne 1 d'échange de matière et/ou de chaleur entre deux fluides, dans laquelle deux fluides sont mis en contact au moyen d'au moins un contacteur gaz/liquide 3, la colonne 1 comprenant au moins une première entrée d'un fluide liquide, au moins une deuxième entrée d'un fluide gazeux, au moins une première sortie d'un fluide gazeux et au moins une deuxième sortie d'un fluide liquide. Selon l'invention, le contacteur est tel que décrit ci-dessus. De plus, la colonne 1 peut comporter au moins un plateau distributeur 2, pour permettre la distribution des fluides sur le contacteur 3.

Le gaz et le liquide peuvent s'écouler dans la colonne à contre-courant ou à co-courant.

En outre, l'invention concerne une structure flottante telle qu'une plateforme, un bateau, une barge flottante par exemple du type FPSO ou FNLG, notamment pour la récupération d'hydrocarbures. La structure flottante comporte au moins une unité de traitement des hydrocarbures comprenant au moins une colonne d'échange de matière et/ou de chaleur selon l'invention.

La colonne selon l'invention peut être utilisée dans des procédés de traitement de gaz, de captage de CO2 (par exemple par lavage aux amines), de distillation ou de transformation de l'air.

De plus, l'invention peut être utilisée avec tout type de solvant.

## Revendications

1. Contacteur pour colonne d'échange de chaleur et/ou de matière entre deux fluides, ledit contacteur (3) comprenant au moins une couche de garnissage (4) constituée par un agencement d'au moins un premier garnissage structuré (A) et un deuxième garnissage structuré (B) développant une surface géométrique spécifique plus élevée que ledit premier garnissage structuré (A), **caractérisé en ce que** la direction principale dudit premier garnissage structuré est parallèle à la direction principale dudit deuxième garnissage structuré.

2. Contacteur selon la revendication 1, dans lequel lesdits premier et deuxième garnissages structurés sont agencés en forme de blocs de garnissage structuré, et dans lequel chaque bloc dudit premier garnissage structuré (A) est entouré par des blocs dudit deuxième garnissage structuré (B).

3. Contacteur selon la revendication 2, dans lequel lesdits blocs sont sensiblement parallélépipédiques, cylindriques, prismatiques et/ou ont une forme de portions de cylindre.

4. Contacteur selon l'une des revendications 2 ou 3, dans lequel le volume de chaque bloc dudit deuxième garnissage structuré (B) est inférieur au volume de chaque bloc dudit premier garnissage structuré (A).

5. Contacteur selon l'une des revendications 2 à 4, dans lequel lesdits blocs étant sensiblement parallélépipédiques, lesdits blocs dudit deuxième garnissage structuré (B) forment, dans un plan horizontal, sensiblement des bandes perpendiculaires.

6. Contacteur selon l'une des revendications 2 à 4, dans lequel lesdits blocs étant sensiblement cylindriques, lesdits blocs dudit deuxième garnissage structuré (B) forment, dans un plan horizontal, sensiblement des cercles concentriques.

7. Contacteur selon l'une des revendications précédentes, dans lequel la périphérie dudit contacteur (3) est constituée par ledit deuxième garnissage structuré (B).

8. Contacteur selon l'une des revendications précédentes, dans lequel la surface géométrique spécifique dudit premier garnissage structuré (A) est comprise entre 100 et 375 m²/m³, et vaut de préférence sensiblement 250 m²/m³.

9. Contacteur selon l'une des revendications précédentes, dans lequel la surface géométrique spécifique dudit deuxième garnissage structuré (B) est comprise entre 250 et 750 m²/m³, et vaut de préférence sensiblement 500 m²/m³.

10. Contacteur selon l'une des revendications précédentes, dans lequel ledit contacteur (3) comporte plusieurs couches de garnissage (4), pour lesquelles les directions principales sont sensiblement perpendiculaires entre elles.

11. Colonne d'échange de chaleur et/ou de matière entre un gaz et un liquide, dans laquelle les deux fluides sont mis en contact au moyen d'au moins un contacteur (3) selon l'une des revendications précédentes.

12. Structure flottante, notamment pour la récupération d'hydrocarbures, **caractérisée en ce qu'**elle comprend au moins une colonne (1) d'échange de chaleur et/ou de matière entre un gaz et un liquide selon la revendication 11.

13. Utilisation d'une colonne selon la revendication 11 pour un procédé de traitement de gaz, de captage de CO₂, de distillation ou de transformation d'air.

## Patentansprüche

1. Kontaktor für eine Wärme- und/oder Stofftauschsäule zwischen zwei Fluiden, wobei der Kontaktor (3) mindestens eine Packungslage (4) umfasst, die von einer Anordnung von mindestens einer ersten strukturierten Packung (A) und einer zweiten strukturierten Packung (B), die eine größere spezifische geometrische Oberfläche als die erste strukturierte Packung (A) entwickelt, gebildet ist, **dadurch gekennzeichnet, dass** die Hauptrichtung der ersten strukturierten Packung parallel zur Hauptrichtung der zweiten strukturierten Packung ist.

2. Kontaktor nach Anspruch 1, bei dem die ersten und zweiten strukturierten Packungen in Form von strukturierten Packungsblöcken angeordnet sind, und bei dem jeder Block der ersten strukturierten Packung (A) von Blöcken der zweiten strukturierten Packung (B) umgeben ist.

3. KOntaktor nach Anspruch 2, bei dem die Blöcke im Wesentlichen parallelflach, zylindrisch, prismenförmig sind und/oder eine Form von Zylinderabschnitten haben.

4. Kontaktor nach einem der Ansprüche 2 oder 3, bei dem das Volumen jedes Blocks der zweiten strukturierten Packung (B) kleiner als das Volumen jedes Blocks der ersten strukturierten Packung (A) ist.

5. Kontaktor nach einem der Ansprüche 2 bis 4, bei dem, wobei die Blöcke im Wesentlichen parallelflach sind, die Blöcke der zweiten strukturierten Packung (B) in einer Horizontalebene im Wesentlichen senkrechte Streifen bilden.

6. Kontaktor nach einem der Ansprüche 2 bis 4, bei dem, wobei die Blöcke im Wesentlichen zylindrisch sind, die Blöcke der zweiten strukturierten Packung (B) in einer Horizontalebene im Wesentlichen konzentrische Kreise bilden.

7. Kontaktor nach einem der vorhergehenden Ansprüche, wobei die Peripherie des Kontaktors (3) von der zweiten strukturierten Packung (B) gebildet ist.

8. Kontaktor nach einem der vorhergehenden Ansprüche, bei dem die spezifische geometrische Oberfläche der ersten strukturierten Packung (A) zwischen 100 und 375 m²/m³ beträgt und vorzugsweise im Wesentlichen gleich 250 m²/m³ ist.

9. Kontaktor nach einem der vorhergehenden Ansprüche, bei dem die spezifische geometrische Oberfläche der zweiten strukturierten Packung (B) zwischen 250 und 750 m²/m³ beträgt und vorzugsweise im Wesentlichen gleich 500 m²/m³ ist.

10. Kontaktor nach einem der vorhergehenden Ansprüche, wobei der Kontaktor (3) mehrere Packungslagen (4) umfasst, bei denen die Hauptrichtungen im Wesentlichen senkrecht zueinander sind.

11. Wärme- und/oder Stofftauschsäule zwischen einem Gas und einer Flüssigkeit, bei der die beiden Fluide mit Hilfe mindestens eines Kontaktors (3) nach einem der vorhergehenden Ansprüche in Kontakt gebracht werden.

12. Schwimmende Struktur, insbesondere für die Rückgewinnung von Kohlenwasserstoffen, **dadurch gekennzeichnet, dass** sie mindestens eine Wärme- und/oder Stofftauschsäule (1) zwischen einem Gas und einer Flüssigkeit nach Anspruch 11 umfasst.

13. Verwendung einer Säule nach Anspruch 11 für ein Verfahren zur Gasbehandlung, zur CO₂-Abscheidung, zur Destillation oder zur Luftumwandlung.

## Claims

1. A contactor for a column intended for heat and/or material exchange between two fluids, said contactor (3) comprising at least one packing layer (4) consisting of an arrangement of at least a first structured packing (A) and a second structured packing (B) developing a specific geometric surface area greater than said first structured packing (A), **characterized in that** the principal direction of said first structured packing is parallel to the principal direction of said second structured packing.

2. A contactor as claimed in claim 1, wherein said first and second structured packing are arranged as structured packing blocks, and wherein each block of said first structured packing (A) is surrounded by blocks of said second structured packing (B).

3. A contactor as claimed in claim 2, wherein said blocks are substantially parallelepipedic, cylindrical, prismatic and/or they have the shape of cylinder portions.

4. A contactor as claimed in any one of claims 2 or 3, wherein the volume of each block of said second structured packing (B) is smaller than the volume of each block of said first structured packing (A).

5. A contactor as claimed in any one of claims 2 to 4 wherein, said blocks being substantially parallelepipedic, said blocks of said second structured packing (B) form, in a horizontal plane, substantially perpendicular bands.

6. A contactor as claimed in any one of claims 2 to 4 wherein, said blocks being substantially cylindrical, said blocks of said second structured packing (B) form, in a horizontal plane, substantially concentric circles.

7. A contactor as claimed in any one of the previous claims, wherein the periphery of said contactor (3) consists of said second structured packing (B).

8. A contactor as claimed in any one of the previous claims, wherein the specific geometric surface area of said first structured packing (A) ranges between 100 and 375 m²/m³, and it is preferably substantially equal to 250 m²/m³.

9. A contactor as claimed in any one of the previous claims, wherein the specific geometric surface area of said second structured packing (B) ranges between 250 and 750 m²/m³, and it is preferably substantially equal to 500 m²/m³.

10. A contactor as claimed in any one of the previous claims, wherein said contactor (3) comprises several packing layers (4) for which the principal directions are substantially perpendicular to one another.

11. A column intended for heat and/or material exchange between a gas and a liquid, wherein the two fluids are contacted by means of at least one contactor (3) as claimed in any one of the previous claims.

12. A floating structure, notably for hydrocarbon recovery, **characterized in that** it comprises at least one column (1) intended for heat and/or material exchange between a gas and a liquid as claimed in claim 11.

13. Use of a column as claimed in claim 11 for a gas treatment, CO₂ capture, distillation or air conversion process.
